# EUROPEAN PATENT APPLICATION

(11) **EP 3 860 129 A1**
(43) Date of publication of application: **04.08.2021**
(21) Application number: 18934653.9
(22) Date of filing: 02.11.2018
(51) Int. Cl.: H04N 21/2187, H04N 21/439, H04N 21/8547

(54) **QUICK START METHOD AND DEVICE FOR LIVE VIDEO**

(30) Priority: 29.09.2018 CN 201811150049
(71) Applicant: Wangsu Science & Technology Co., Ltd., Shanghai 201800 (CN)
(72) Inventor: ZHUANG, Xiaochuan, Shanghai 201800 (CN); LIU, Peixin, Shanghai 201800 (CN); LIN, Pengcheng, Shanghai 201800 (CN)
(74) Representative: De Arpe Tejero, Manuel
(86) International application number: PCT/CN2018/113733
(87) International publication number: WO 2020/062438

(57) **Abstract**

The present disclosure provides a method and a device for quick start of live video streaming. The method includes: recognizing a type of a current player and invoking a quick start policy compatible with the type of the current player; during the execution of the quick start policy, retrieving a current system time and a quick start configuration time corresponding to the current player; based on the current system time and the quick start configuration time, determining a quick start index position in a target live video stream, and based on the quick start index position, determining a key frame index position in the target live video stream; and sending video data in the target live video stream starting from the key frame index position to the current player and discarding audio data in the target live video stream between the key frame index position and the quick start index position. The technical solution provided by the embodiments of the present disclosure can effectively increase a speed of displaying a first screen by different players.

## Description

### FIELD OF THE DISCLOSURE

The present disclosure relates to the field of Internet technology, and more particularly, relates to a method and a device for quick start of live video streaming.

### BACKGROUND

As the live streaming business grows rapidly, to provide stable and fast live streaming services to users, live video streaming platforms often select content delivery network (CDN) to expedite live streaming contents. A CDN may receive a data stream of live video streaming sent by a live video streaming platform and may feed the data stream of the live video streaming to a client terminal through an edge node close to the client terminal, thereby providing a stable and fast live video streaming experience.

Currently, the CDN is often pre-configured with a quick start policy for video streaming. When the data stream of the live video streaming is sent to the client terminal, the quick start policy may be used to increase a speed of displaying a first screen at the client terminal. However, as types of players at the client terminal increases, the quick start policy pre-configured in the CDN may not be applicable to each and every type of the players, may be unable to effectively increase the speed of displaying the first screen, and may cause stuttering of the player.

### BRIEF SUMMARY OF THE DISCLOSURE

The objective of the present disclosure is to provide a method and a device for quick start of live video streaming that can effectively increase a speed of displaying a first screen by different players.

To achieve the above objective, one aspect of the present disclosure provides a method for quick start of live video streaming. The method includes: recognizing a type of a current player and invoking a quick start policy compatible with the type of the current player; during the execution of the quick start policy, retrieving a current system time and a quick start configuration time corresponding to the current player; based on the current system time and the quick start configuration time, determining a quick start index position in a target live video stream, and based on the quick start index position, determining a key frame index position in the target live video stream; and sending video data in the target live video stream starting from the key frame index position to the current player and discarding audio data in the target live video stream between the key frame index position and the quick start index position.

To achieve the above objective, another aspect of the present disclosure provides a device for quick start of live video streaming. The device includes: a memory configured to store a computer program; and a processor configured to execute the computer program stored in the memory to implement the disclosed method.

To achieve the above objective, another aspect of the present disclosure provides a method for quick start of live video streaming. The method includes: recognizing a type of a current player and invoking a quick start policy compatible with the type of the current player; during the execution of the quick start policy, retrieving a current system time and a quick start configuration time corresponding to the current player; based on the current system time and the quick start configuration time, determining a quick start index position in a target live video stream; and sending audio data in the target live video stream starting from the quick start index position to the current player and discarding video data in the target live video stream between the quick start index position and a subsequent key frame.

To achieve the above objective, another aspect of the present disclosure provides a device for quick start of live video streaming. The device includes: a memory configured to store a computer program; and a processor configured to execute the computer program stored in the memory to implement the disclosed method.

To achieve the above objective, another aspect of the present disclosure provides a method for quick start of live video streaming. The method includes: recognizing a type of a current player and invoking a quick start policy compatible with the type of the current player; during the execution of the quick start policy, retrieving a current system time and a quick start configuration time corresponding to the current player; based on the current system time and the quick start configuration time, determining a quick start index position in a target live video stream, and based on the quick start index position, determining a key frame index position in the target live video stream; and sending audio and video data in the target live video stream starting from the key frame index position to the current player, and incrementally numbering audio frames and video frames in the audio and video data according to a sending sequence of the audio frames and the video frames.

To achieve the above objective, another aspect of the present disclosure provides a device for quick start of live video streaming. The device includes: a memory configured to store a computer program; and a processor configured to execute the computer program stored in the memory to implement the disclosed method.

To achieve the above objective, another aspect of the present disclosure provides a method for quick start of live video streaming. The method includes: recognizing a type of a current player and invoking a quick start policy compatible with the type of the current player; during the execution of the quick start policy, retrieving a timestamp for a current video frame in a target live video stream and a quick start configuration time corresponding to the current player; calculating a time difference between the timestamp for the current video frame and the quick start configuration time, and based on the time difference, determining a key frame index position in the target live video stream; and sending audio and video data in the target live video stream starting from the key frame index position to the current player.

To achieve the above objective, another aspect of the present disclosure provides a device for quick start of live video streaming. The device includes: a memory configured to store a computer program; and a processor configured to execute the computer program stored in the memory to implement the disclosed method.

In the embodiments of the present disclosure, different quick start policies may be directed to the commonly used players. After receiving the request sent by the player, the server may recognize the type of the player and may invoke the corresponding quick start policy to send the live video streaming data to the player. In one embodiment, the current system time and the quick start configuration time of the player may be retrieved in advance. Then, based on the current system time and the quick start configuration time, the quick start index position may be determined. For an ordinary FLASH player, the first key frame may be searched from preceding the quick start index position. The obtained first key frame is determined to be the key frame index position. Then, the video data in the target live video stream starting from the key frame index position may be sent to the current player, and the audio data in the target live video stream between the key frame index position and the quick start index position may be discarded. The objective for the process is that the FLASH player may rapidly play the data between the key frame index position and the quick start index position. Thus, at the same time that the time for displaying the first screen is expedited, the real-time performance of the live streaming is improved.

### BRIEF DESCRIPTION OF THE DRAWINGS

In order to more clearly illustrate the technical solutions in the embodiments of the present disclosure, drawings used in the description of the embodiments will be briefly described below. The drawings in the following description are only some embodiments of the present disclosure. Other drawings may also be obtained by those of ordinary skill in the art without inventive work.
FIG. 1 illustrates a schematic diagram of an exemplary system architecture according to disclosed embodiments of the present disclosure;
FIG. 2 illustrates a flowchart of an exemplary method for quick start of live video streaming according to disclosed embodiments of the present disclosure;
FIG. 3 illustrates a timing diagram of sending audio and video data according to disclosed embodiments of the present disclosure;
FIG. 4 illustrates a schematic diagram of an exemplary device for quick start of live video streaming according to disclosed embodiments of the present disclosure;
FIG. 5 illustrates a flowchart of another exemplary method for quick start of live video streaming according to disclosed embodiments of the present disclosure;
FIG. 6 illustrates another timing diagram of sending audio and video data according to disclosed embodiments of the present disclosure;
FIG. 7 illustrates a flowchart of another exemplary method for quick start of live video streaming according to disclosed embodiments of the present disclosure;
FIG. 8 illustrates another timing diagram of sending audio and video data according to disclosed embodiments of the present disclosure;
FIG. 9 illustrates another timing diagram of sending audio and video data according to disclosed embodiments of the present disclosure;
FIG. 10 illustrates a flowchart of another exemplary method for quick start of live video streaming according to disclosed embodiments of the present disclosure; and
FIG. 11 illustrates another timing diagram of sending audio and video data according to disclosed embodiments of the present disclosure.

### DETAILED DESCRIPTION

To make the objectives, technical solutions, and advantages of the present disclosure clearer, the following further describes the embodiments of the present disclosure in details with reference to the accompanying drawings.

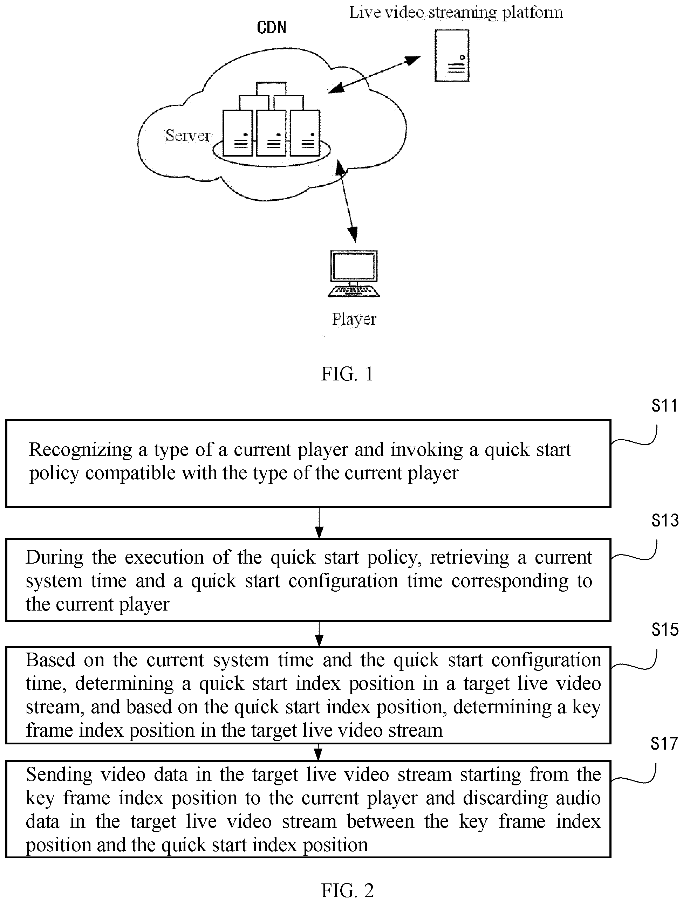

The present disclosure provides a method for quick start of live video streaming. The method may be applied to a server in a CDN. Referring to FIG. 1, the server in the CDN may be connected to a service server of a live video streaming platform to obtain and buffer streaming data of live video streaming from the service server. In addition, the server in the CDN may communicate with a player of a client to receive a video loading request sent by the player and may feedback streaming data of corresponding live video streaming to the player.

Referring to FIG. 2, the present disclosure provides a method for quick start of live video streaming. The method may include the following steps.

S11: recognizing a type of a current player and invoking a quick start policy compatible with the type of the current player.

In one embodiment, to expedite time for displaying a first screen by different types of the players, a plurality of quick start policies may be configured in the server in advance. The plurality of quick start policies may be associated with different types of the players. As such, after the video loading request sent by the current player is received, the type of the current player may be recognized from the video loading request.

In one embodiment, a type of the player and a corresponding quick start policy may be stored in the server in a key-value pair data structure. An identifier representing the type of the player is a key. The corresponding quick start policy is a value. As such, after the type of the current player is recognized, the type of the current player is used as the key to query the compatible quick start policy in the server and to retrieve the quick start policy.

S13: during the execution of the quick start policy, retrieving a current system time and a quick start configuration time corresponding to the current player.

In one embodiment, the server may execute the quick start policy compatible with the type of the current player. During the execution of the quick start policy, the current system time of the server and the quick start configuration time previously agreed upon with the current player are retrieved first. For example, the current system time may be the Greenwich Mean Time (GMT). The quick start configuration time may be a time interval. For example, the quick start configuration time may be 1 s.

S15: based on the current system time and the quick start configuration time, determining a quick start index position in a target live video stream, and based on the quick start index position, determining a key frame index position in the target live video stream.

In one embodiment, after the current system time and the quick start configuration time are retrieved, the quick start index position may be determined in the target live video stream requested and obtained by the current player. A time difference between the current system time and the quick start configuration time may be calculated. A position in the target live video stream corresponding to the time difference is determined to be the quick start index position. For example, the current system time is 21:18:15 and the quick start configuration time is 1 s. The time difference is calculated to be 21:18:14, which is the quick start index position.

In one embodiment, if video data sent to the player is non-key frame (non-I frame) data, playing the non-key frame data generates a blurred screen. Thus, it is necessary to first send the key frame (I-frame) data to the player. Based on the quick start index position, the key frame index position representing the key frame may be determined in the target live video stream.

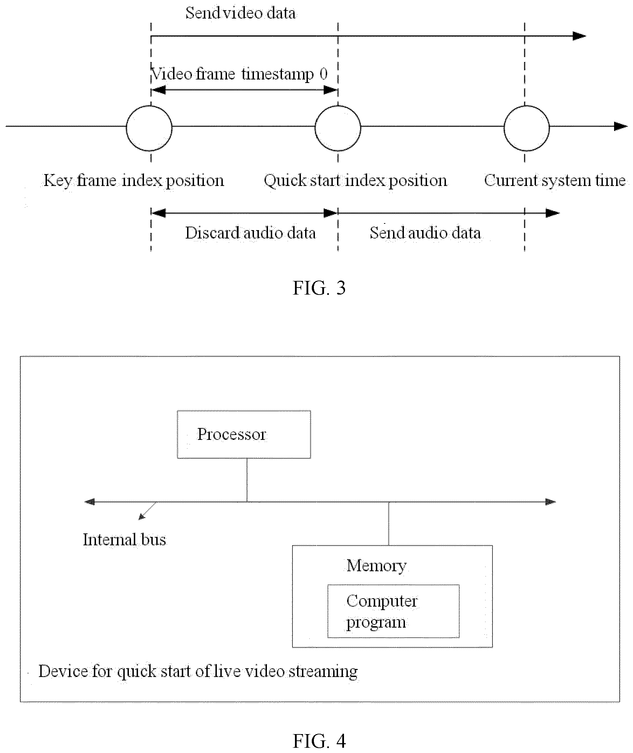

Referring to FIG. 3, a first key frame may be queried in the target live video stream starting from the quick start index position in a direction opposite to a video playing sequence. A position corresponding to the first key frame obtained through querying is determined to be the key frame index position. As shown in FIG. 3, the direction pointed by arrows is the normal playing sequence of the target live video stream.

S17: sending video data in the target live video stream starting from the key frame index position to the current player and discarding audio data in the target live video stream between the key frame index position and the quick start index position.

Referring to FIG. 3, in one embodiment, after the key frame index position is determined, the video data in the target live video stream starting from the key frame index position may be sent to the current player and the audio data in the target live video stream between the key frame index position and the quick start index position may be discarded. At the same time, timestamps for each of video frames of the video data in the target live video stream between the key frame index position and the quick start index position are set to 0. The objective for the process is that, when receiving the video frames with the timestamp 0, a FLASH player may not decode the video frames. As such, the video frames between the key frame index position and the quick start index position may be quickly played by the FLASH player. Starting from the quick start index position, the server may incrementally number the timestamps for each of the video frames of the video data in the target live video stream according to a sending sequence of the video frames. Starting from the quick start index position, the server may send the audio data in the target live video stream to the current player. In other words, starting from the quick start index position, the server may send the normal audio and video data to the FLASH player. As such, the FLASH player may have time to buffer the data in the target live video stream and may rapidly play the video frames between the key frame index position and the quick start index position. Thus, at the same time that the time for displaying the first screen is expedited, the real-time performance of the live streaming is maintained.

Referring to FIG. 4, the present disclosure also provides a device for quick start of live video streaming. The device includes a memory configured to store a computer program and a processor configured to execute the computer program stored in the memory to implement the method for quick start of live video streaming.

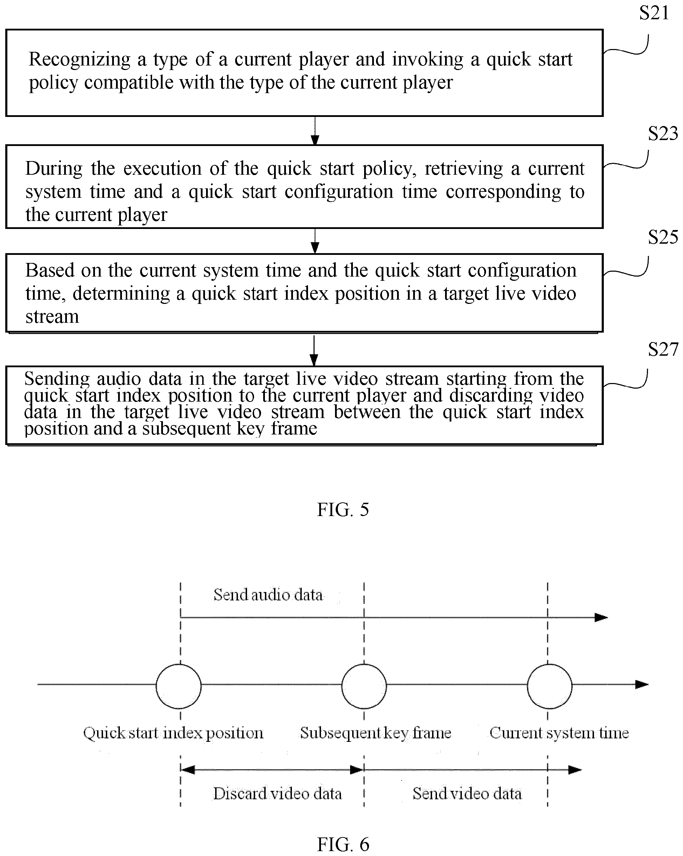

Referring to FIG. 5, the present disclosure provides another method for quick start of live video streaming. The method may be directed to a player that synchronizes decoder information based on the audio frames. As shown in FIG. 5, the method may include the following steps.

S21: recognizing a type of a current player and invoking a quick start policy compatible with the type of the current player.

S23: during the execution of the quick start policy, retrieving a current system time and a quick start configuration time corresponding to the current player.

S25: based on the current system time and the quick start configuration time, determining a quick start index position in a target live video stream.

S27: sending audio data in the target live video stream starting from the quick start index position to the current player and discarding video data in the target live video stream between the quick start index position and a subsequent key frame.

In one embodiment, when recognizing the type of the current player is a player that synchronizes the decoder information based on the audio frames, the corresponding quick start policy is invoked. During the execution of the quick start policy, according to the method described in the embodiments of the present disclosure, the current system time and the quick start configuration time previously agreed upon with the current player are retrieved. Then, according to the same method, a quick start index position is determined.

In one embodiment, because the player of the type synchronizes the decoder information based on the audio frames, the audio data in the live video stream starting from the quick start index position is sent to the current player according to the method shown in FIG. 6, and the video data in the target live video stream between the quick start index position and the subsequent key frame is discarded. The subsequent key frame refers to a first key frame obtained by searching from the quick start index position in the video playing sequence. The objective for the process is that, after receiving the audio data, the current player starts synchronizing the decoder information based on the audio frames, such that the decoding efficiency is subsequently improved. Because the video frame at the quick start index position may be a non-key frame, sending the non-key frame to the player may cause the player to display a blurred screen. Thus, the video frames between the quick start index position and the subsequent key frame are all discarded. Starting from the subsequent key frame, the video data in the target live video stream is normally sent to the current player. It is ensured that the video frame the player firstly received is a key frame to avoid displaying the blurred screen by the player.

The present disclosure also provides another device for quick start of live video streaming. The device includes a memory configured to store a computer program and a processor configured to execute the computer program stored in the memory to implement the method for quick start of live video streaming directed to the player that synchronizes the decoder information based on the audio frames.

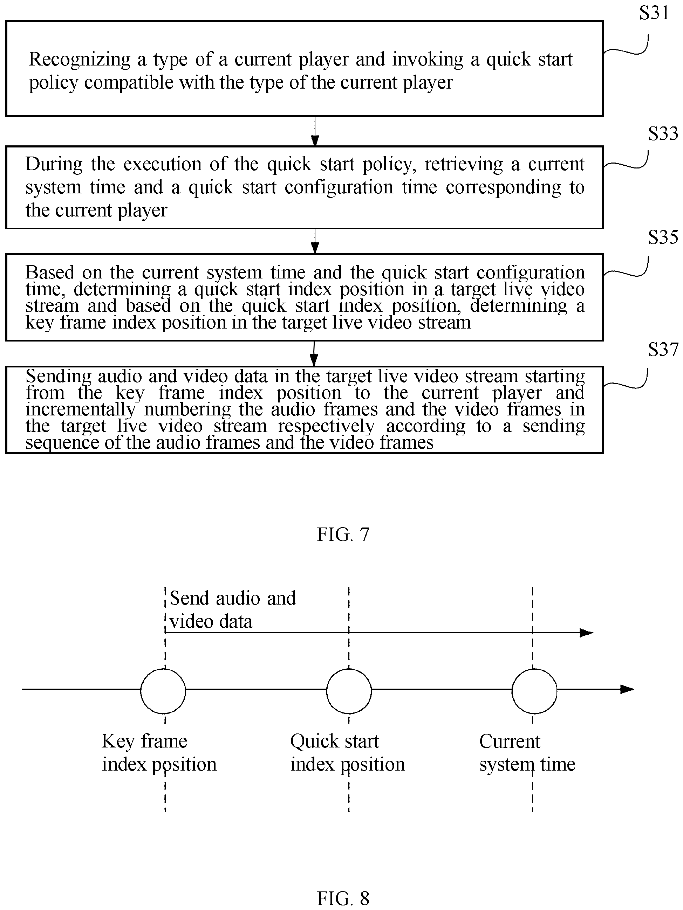

Referring to FIG. 7, the present disclosure also provides a method for quick start of live video streaming. The method may be directed to the player that maintains the synchronization between the audio frames and the video frames. As shown in FIG. 7, the method may include the following steps.

S31: recognizing a type of a current player and invoking a quick start policy compatible with the type of the current player.

S33: during the execution of the quick start policy, retrieving a current system time and a quick start configuration time corresponding to the current player.

S35: based on the current system time and the quick start configuration time, determining a quick start index position in a target live video stream and based on the quick start index position, determining a key frame index position in the target live video stream.

S37: sending audio and video data in the target live video stream starting from the key frame index position to the current player and incrementally numbering the audio frames and the video frames in the target live video stream respectively according to a sending sequence of the audio frames and the video frames.

In one embodiment, after the type of the current player is recognized to be a player that maintains the synchronization between the audio frames and the video frames, a corresponding quick start policy may be invoked. During the execution of the quick start policy, according to the method described in the embodiments of the present disclosure, the current system time and the quick start configuration time previously agreed upon with the current player are retrieved. Then, according to the same method, a quick start index position is determined.

In one embodiment, for the type of the player that maintains the synchronization between the audio frames and the video frames, if real-time requirement is not critical but a large amount of buffered data is required, and the demand for initial synchronization between the audio data and the video data is high, the timing diagram of sending the audio and video data is illustrated in FIG. 8. A position corresponding to a first key from is obtained by querying in the target live video stream starting from the quick start index position in a direction opposite to the video playing sequence. The position corresponding to the obtained first key frame is determined to be the key frame index position. The audio frames in the target live video stream starting from the key frame index position are sent to the current player to maintain the synchronization between the audio frames and the video frames. And the audio frames and the video frames in the target live video stream are incrementally numbered respectively according to the sending sequence of the audio frames and the video frames.

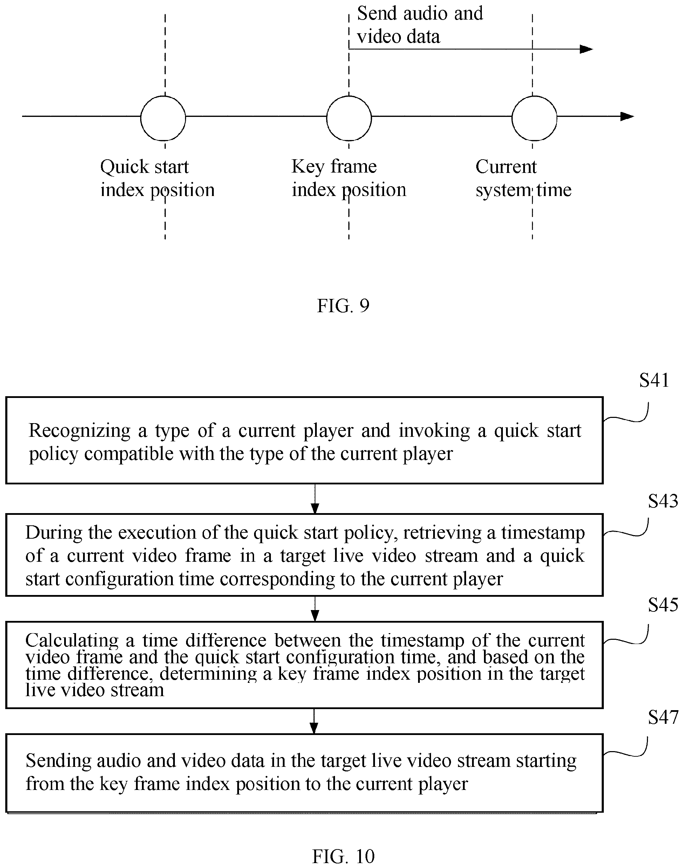

The method for determining the key frame index position as shown in FIG. 8 may ensure that the player has sufficient buffering time to ensure the audio and video synchronization but may have the drawback of a substantial delay in live video streaming. To solve this problem, in one embodiment, as shown in FIG. 9, a key frame closest to the quick start index position is queried between the quick start index position and the position corresponding to the current system time. The position corresponding to the obtained key frame is determined to be the key frame index position. The audio frames in the target live video stream starting from the key frame index position are sent to the current player as shown in FIG. 9. And the audio frames and the video frames in the target live video stream are incrementally numbered respectively according to the sending sequence of the audio frames and the video frames. The method shown in FIG. 9 not only ensures a certain amount of buffered data, but also improves the real-time performance of the playing. Moreover, because the audio and video data are sent from the position corresponding to the key frame, the synchronization between the audio data and the video data is ensured and the issue of displaying the blurred screen by the player is avoided.

The present disclosure also provides another device for quick start of live video streaming. The device includes a memory configured to store a computer program and a processor configured to execute the computer program stored in the memory to implement the method for quick start of live video streaming while maintaining the synchronization between the audio frames and the video frames.

In the foregoing embodiments of the present disclosure, the current system time is used to determine the quick start index position. However, in this case, the video data may be inaccurately sent. The reason is that, within 1 s, the server may receive several seconds data of the target live video stream sent from the live video streaming platform. For example, at 21:18:15, the server receives 3 s audio and video data of the target live video stream. Assuming that the current system time is 21:18:16 and agreed upon quick start configuration time is 1 s, the quick start index position is determined to be 21:18:15. If the audio and video data are sent from the quick start index position, 3 s audio and video data may be sent at one time, such that the data is inaccurately sent. In view of this, the present disclosure also provides another method for quick start of live video streaming. The method may be directed to the player that accurately buffers the audio and video data according to timestamps. Referring to FIG. 10, the method may include the following steps.

S41: recognizing a type of a current player and invoking a quick start policy compatible with the type of the current player.

S43: during the execution of the quick start policy, retrieving a timestamp of a current video frame in a target live video stream and a quick start configuration time corresponding to the current player.

S45: calculating a time difference between the timestamp of the current video frame and the quick start configuration time, and based on the time difference, determining a key frame index position in the target live video stream.

S47: sending audio and video data in the target live video stream starting from the key frame index position to the current player.

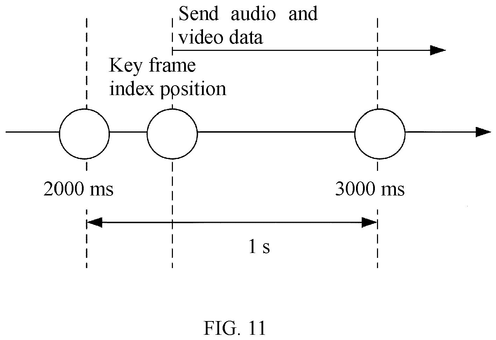

In one embodiment, after the type of the current player is recognized to be a player that accurately buffers the audio and video data according to timestamps, a corresponding quick start policy may be invoked. During the execution of the quick start policy, according to the method described in the embodiments of the present disclosure, the timestamp of the already buffered current video frame in the target live video stream and the quick start configuration time previously agreed upon with the current player are retrieved. Then, the time difference between the timestamp of the current video frame and the quick start configuration time is calculated. Based on the time difference, the key frame index position is determined in the target live video stream. In particular, a first key frame having the timestamp greater than or equal to the time difference may be searched in the key frames already buffered in the server. The position corresponding to the obtained first key frame in the target live video stream is determined to be the key frame index position. For example, as shown in FIG. 11, the timestamp of the current video frame is 3000ms and the quick start configuration time is 1 s. The calculated time difference is 2000ms. Then, the key frame having the timestamp greater than or equal to 2000ms and closest to 2000ms may be searched in the key frames already buffered in the server. The position corresponding to the closest key frame is determined to be the key frame index position.

In one embodiment, because the player accurately buffers the audio and video data according to the timestamps, the audio and video data in the target live video stream starting from the key frame index position are sent to the current player. As such, calculating the time difference based on the timestamps ensures that the position corresponding to the calculated time difference at most corresponds to only one video frame. Thus, the audio and video data can be accurately sent to the player.

The present disclosure also provides another device for quick start of live video streaming. The device includes a memory configured to store a computer program and a processor configured to execute the computer program stored in the memory to implement the method for quick start of live video streaming directed to the player that accurately buffers the audio and video data according to the timestamps.

In the embodiments of the present disclosure, different quick start policies may be directed to the commonly used players. After receiving the request sent by the player, the server may recognize the type of the player and may invoke the corresponding quick start policy to send the live video streaming data to the player. In one embodiment, the current system time and the quick start configuration time of the player may be retrieved in advance. Then, based on the current system time and the quick start configuration time, the quick start index position may be determined. For an ordinary FLASH player, the first key frame may be searched from preceding the quick start index position. The obtained first key frame is determined to be the key frame index position. Then, the video data in the target live video stream starting from the key frame index position may be sent to the current player, and the audio data in the target live video stream between the key frame index position and the quick start index position may be discarded. The objective for the process is that the FLASH player may rapidly play the data between the key frame index position and the quick start index position. Thus, at the same time that the time for displaying the first screen is expedited, the real-time performance of the live streaming is improved.

Through the description of the embodiments of the present disclosure, those skilled in the art may clearly understand that the embodiments may be implemented in software with necessary general-purpose hardware platform or may be implemented in hardware. Based on such understanding, the above described technical solution or the portion of the contribution in addition to the existing technology may exist in the form of a software product. The computer software product may be stored in a computer readable storage medium, such as a ROM/RAM, a magnetic disk, or an optical disk, etc., and may include a plurality of instructions to be executed by a computer equipment (maybe a personal computer, a server, or a networking device, etc.) to implement some or all the steps in the method of the embodiments of the present disclosure.

It should be understood by those skilled in the art that the foregoing are merely certain preferred embodiments of the present disclosure and are not intended to limit the present invention. Without departing from the spirit and principles of the present disclosure, any modifications, equivalent substitutions, and improvements, etc. shall fall within the scope of the present disclosure.

## Claims

1. A method for quick start of live video streaming, comprising:
recognizing a type of a current player and invoking a quick start policy compatible with the type of the current player;
during the execution of the quick start policy, retrieving a current system time and a quick start configuration time corresponding to the current player;
based on the current system time and the quick start configuration time, determining a quick start index position in a target live video stream, and based on the quick start index position, determining a key frame index position in the target live video stream; and
sending video data in the target live video stream starting from the key frame index position to the current player and discarding audio data in the target live video stream between the key frame index position and the quick start index position.

2. The method of claim 1, wherein based on the current system time and the quick start configuration time, determining the quick start index position in the target live video stream includes:
calculating a time difference between the current system time and the quick start configuration time and determining a position corresponding to the time difference in the target live video stream to be the quick start index position.

3. The method of claim 1, wherein based on the quick start index position, determining the key frame index position in the target live video stream includes:
querying a first key frame in the target live video stream starting from the quick start index position in a direction opposite to a video playing sequence, and determining a position corresponding to the first key frame obtained through querying to be the key frame index position.

4. The method of claim 1, wherein when the video data in the target live video stream starting from the key frame index position is sent to the current player, the method further includes:
setting timestamps for each of video frames of the video data in the target live video stream between the key frame index position and the quick start index position to 0.

5. The method of claim 1 or 4, further including:
starting from the quick start index position, incrementally numbering the timestamps for each of the video frames in the target live video stream according to a sending sequence of the video frames; and
starting from the quick start index position, sending the audio data in the target live video stream to the current player.

6. A device for quick start of live video streaming, comprising:
a memory configured to store a computer program; and
a processor configured to execute the computer program stored in the memory to implement the method of any of claims 1-5.

7. A method for quick start of live video streaming, comprising:
recognizing a type of a current player and invoking a quick start policy compatible with the type of the current player;
during the execution of the quick start policy, retrieving a current system time and a quick start configuration time corresponding to the current player;
based on the current system time and the quick start configuration time, determining a quick start index position in a target live video stream; and
sending audio data in the target live video stream starting from the quick start index position to the current player and discarding video data in the target live video stream between the quick start index position and a subsequent key frame.

8. The method of claim 7, wherein based on the current system time and the quick start configuration time, determining the quick start index position in the target live video stream includes:
calculating a time difference between the current system time and the quick start configuration time and determining a position corresponding to the time difference in the target live video stream to be the quick start index position.

9. The method of claim 7, further including:
starting from the subsequent key frame, sending the video data in the target live video stream to the current player.

10. A device for quick start of live video streaming, comprising:
a memory configured to store a computer program; and
a processor configured to execute the computer program stored in the memory to implement the method of any of claims 7-9.

11. A method for quick start of live video streaming, comprising:
recognizing a type of a current player and invoking a quick start policy compatible with the type of the current player;
during the execution of the quick start policy, retrieving a current system time and a quick start configuration time corresponding to the current player;
based on the current system time and the quick start configuration time, determining a quick start index position in a target live video stream, and based on the quick start index position, determining a key frame index position in the target live video stream; and
sending audio and video data in the target live video stream starting from the key frame index position to the current player, and incrementally numbering audio frames and video frames in the audio and video data according to a sending sequence of the audio frames and the video frames.

12. The method of claim 11, wherein based on the current system time and the quick start configuration time, determining the quick start index position in the target live video stream includes:
calculating a time difference between the current system time and the quick start configuration time and determining a position corresponding to the time difference in the target live video stream to be the quick start index position.

13. The method of claim 11, wherein based on the quick start index position, determining the key frame index position in the target live video stream includes:
querying a first key frame in the target live video stream starting from the quick start index position in a direction opposite to a video playing sequence, and determining a position corresponding to the first key frame obtained through querying to be the key frame index position.

14. The method of claim 11, wherein based on the quick start index position, determining the key frame index position in the target live video stream includes:
querying a key frame closest to the quick start index position between the quick start index position and a position corresponding to the current system time, and determining a position corresponding to the key frame obtained through querying to be the key frame index position.

15. A device for quick start of live video streaming, comprising:
a memory configured to store a computer program; and
a processor configured to execute the computer program stored in the memory to implement the method of any of claims 11-14.

16. A method for quick start of live video streaming, comprising:
recognizing a type of a current player and invoking a quick start policy compatible with the type of the current player;
during the execution of the quick start policy, retrieving a timestamp for a current video frame in a target live video stream and a quick start configuration time corresponding to the current player;
calculating a time difference between the timestamp for the current video frame and the quick start configuration time, and based on the time difference, determining a key frame index position in the target live video stream; and
sending audio and video data in the target live video stream starting from the key frame index position to the current player.

17. The method of claim 16, wherein based on the quick start index position, determining the key frame index position in the target live video stream includes:
querying a first key frame having the timestamp greater than or equal to the time difference in key frames already buffered in a server, and determining a position corresponding to the queried first key frame in the target live video stream to be the key frame index position.

18. A device for quick start of live video streaming, comprising:
a memory configured to store a computer program; and
a processor configured to execute the computer program stored in the memory to implement the method of any of claims 16-17.
